# EUROPEAN PATENT APPLICATION

(11) **EP 0 859 228 A2**
(43) Date of publication of application: **19.08.1998**
(21) Application number: 98102599.2
(22) Date of filing: 16.02.1998
(51) Int. Cl.: G01N 27/30

(54) **Electrochemical analyzing apparatus**

(30) Priority: 17.02.1997 JP 32175/97
(71) Applicant: Hitachi, Ltd., Chiyoda-ku, Tokyo 101-0062 (JP)
(72) Inventor: Shiba, Masaki, Hitachinaka-shi, Ibaraki-ken (JP); Niiyama, Yasushi, Mito-shi, Ibaraki-ken (JP); Yasuda, Kenji, Nakano-ku, Tokyo (JP)
(74) Representative: von Hellfeld, Axel, Dr. Dipl.-Phys.

(57) **Abstract**

An electrochemical analyzing apparatus is to measure electrochemical characteristics of each of samples in a flow through cell (10). The flow through cell (10) is formed by placing two electrically insulating base plates (11, 12) and a sealing member (13) one above another with the sealing member lying at the middle. A working electrode (14) is fixed onto one surface of the insulating base plate (11). A counter electrode (15) is fixed onto one surface of the insulating base plate (12). The counter electrode (15) is a platinum electrode subjected to annealing for one hour at 1000 °C. With such a construction, deposition of black particles on the flow through cell is suppressed and the flow through cell can be used in a stable condition for a long period of time.

## Description

### BACKGROUND OF THE INVENTION

### 1. Field of the Invention

The present invention relates to an electrochemical analyzing apparatus, and more particularly to an analyzing apparatus for carrying out electrochemical analysis of body fluid samples by applying a voltage to between a working electrode and a counter electrode.

### 2. Description of the Related Art

Electrochemical measurement is capable of realizing high-sensitivity measurement with a relatively simple apparatus construction, and therefore has been widely used in the field of analytical chemistry. There are known several kinds of electrochemical measurement; e.g., (1) potentiometry in which an electrode potential of a measuring electrode relative to a reference electrode is measured, (2) amperometry in which an amount of electric charges flowing through a measuring electrode applied with a certain voltage relative to a reference electrode is measured, (3) voltammetry in which a relationship between a voltage applied to a working electrode and an amount of current flowing through the working electrode is measured, and (4) impedance measurement in which an alternating current is applied to an electrode and properties of a resulting voltage are measured.

In many cases, electrodes for use in the above measurement are usually made of platinum-group metals, above all platinum, because of superior characteristics that chemical stability is high, a hydrogen overpotenital is small, and polarization is hard to occur.

Also, relating to a method of cleaning electrodes in the case where the electrodes each made of a platinum-group metal are set in a flow through cell and body fluids such as blood and urine are continuously measured, it is known that a cleaning effect is enhanced by repeatedly applying a voltage to between a working electrode and a counter electrode as described in, e.g., JP, A, 6-222037.

When a platinum-group metal, especially platinum, is used as a material of electrodes, it exhibits very superior characteristics in analysis which is carried out several tens to several hundreds times for experimental purposes. However, there has been a problem that when a voltage is repeatedly applied to between electrodes for a long period of time, by way of example, while samples each containing a large amount of any halogen element as one of components, such as blood, are continuously measured for a long period of time, or while a solution containing a strong alkaline component, such as potassium hydroxide, is held as a wash for cleaning electrode surfaces in contact with the electrode surfaces, black particles (more exactly, apparently black solid particles) emerge from the vicinity of the cathode and deposit on a measuring cell to make it contaminated, and hence carryover from a preceding cycle to a succeeding cycle of measurement is so increased as to affect a measured result.

### SUMMARY OF THE INVENTION

An object of the present invention is to provide an electrochemical analyzing apparatus which can suppress deposition of black particles on a measuring cell, and can continue satisfactory analytical measurement for a long period of time.

According to the present invention, in an apparatus for carrying out electrochemical analysis of samples by applying a voltage to between a working electrode and a counter electrode both disposed in a measuring cell, the counter electrode is formed of a platinum-group metal subjected to treatment for increasing the size of metal crystal grains.

The treatment for increasing the size of metal crystal grains is achieved by annealing the platinum-group metal or doping a different kind of platinum-group metal in the surface of one particular platinum-group metal. When a base material (one particular platinum-group metal) used in the latter doping case is platinum, a metal to be doped in the base material is preferably palladium or iridium. The annealing is preferably performed for one hour at a temperature of 1000 °C on the platinum-group metal which is machined to have a shape of the counter electrode. The surface of the annealed metal is finished by mirror-grade polishing before it is employed as the counter electrode.

As a result of conducting a variety of analytical measurement about emergence of black particles depositing on the measuring cell, the inventors found that the emergence of black particles was attributable to deterioration of the electrode material. Specifically, when a voltage is repeatedly applied to between electrodes while samples each containing a large amount of any halogen element or a solution containing a strong alkaline component, such as potassium hydroxide, which serves as a wash for cleaning electrodes, is held in contact with electrode surfaces, the electrode surfaces are eroded, causing platinum or a platinum compound to exfoliate from the electrode material in the vicinity of the cathode. The exfoliated substance deposits as black particles on the measuring cell. According to the present invention, since deposition of the black particles is suppressed remarkably, carryover from a preceding cycle of measuring one sample to a succeeding cycle of measuring a next sample can be reduced even with the measuring cell repeatedly used for a number of samples. It is therefore possible to continue stable measurement for a long period of time.

### BRIEF DESCRIPTION OF THE DRAWINGS

Fig. 1 is an exploded perspective view of a flow through cell for use in an electrochemical analyzing apparatus according to one embodiment of the present invention.

Fig. 2 is a block diagram showing an entire configuration of the electrochemical analyzing apparatus according to one embodiment of the present invention.

Fig. 3 is a graph for explaining an advantageous effect achieved with the present invention.

Fig. 4 is a block diagram showing an entire configuration of an electrochemical analyzing apparatus according to a third embodiment of the present invention.

### DESCRIPTION OF THE PREFERRED EMBODIMENTS

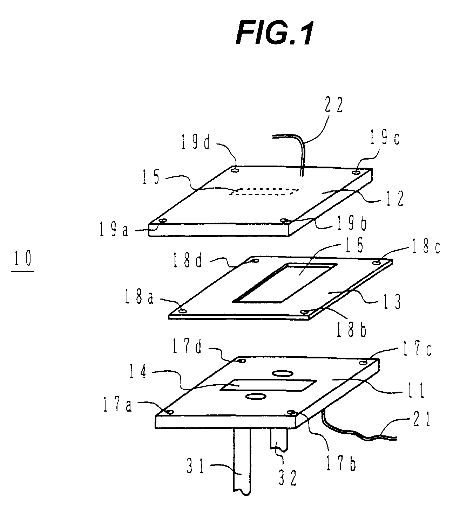

An electrochemical analyzing apparatus according to one embodiment of the present invention will be described hereunder with reference to Figs. 1 to 3.

First, a structure of a measuring cell for use in the electrochemical analyzing apparatus according to one embodiment of the present invention will be explained with reference to Fig. 1.

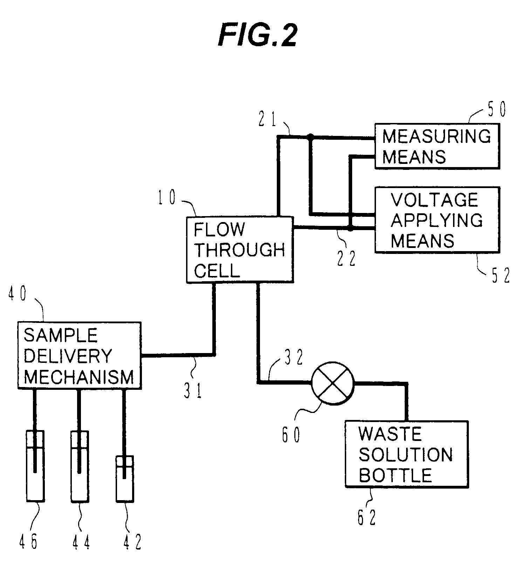

Fig. 1 is an exploded perspective view of a flow through cell for use in the electrochemical analyzing apparatus shown in Fig. 2.

In Fig. 1, a flow through cell 10 serving as a measuring cell is formed by placing two electrically insulating base plates 11, 12 and a sealing member 13 one above another with the sealing member 13 lying at the middle as shown.

The insulating base plate 11 is formed of poly-ether-ether-ketone as one of plastics. A working electrode 14 is fixed onto one surface of the insulating base plate 11. The working electrode 14 is fabricated by machining platinum into a shape of the electrode and annealing it for one hour at 1000 °C. A recess is formed in the one surface of the insulating base plate 11, and the working electrode 14 having been subjected to the annealing is bonded to and embedded in the recess. After that, the exposed surface of the working electrode is finished by mirror-grade polishing.

Also, the insulating base plate 12 is formed of a transparent acryl material. A counter electrode 15 is fixed onto one surface of the insulating base plate 12. The counter electrode 15 is fabricated by machining platinum into a shape of the electrode and annealing it for one hour at 1000 °C. A recess is formed in the one surface of the insulating base plate 12, and the counter electrode 15 having been subjected to the annealing is bonded to and embedded in the recess. After that, the exposed surface of the counter electrode is finished by mirror-grade polishing.

Note that the counter electrode 15 is not limited in its shape to the plate-like form shown in Fig. 1, but may be made of platinum in the rod-like form having been subjected to annealing for one hour at 1000 °C. Also, electrode materials are not limited to platinum, but may be any other suitable platinum-group metal. Further, because the working electrode 14 hardly takes part in emergence of the black particles, it may be made of platinum not subjected to the annealing.

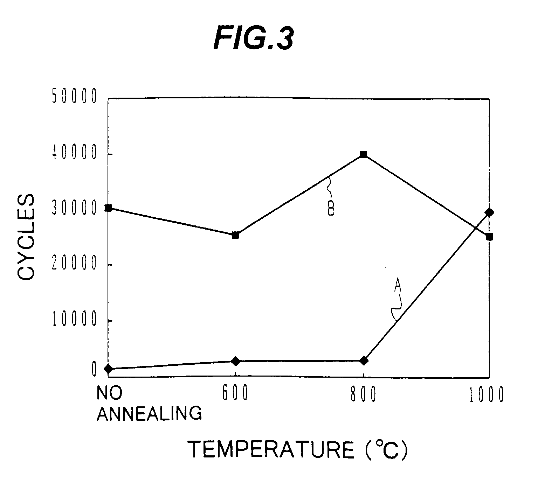

Platinum as the electrode material is formed into a thin plate (sheet) by rolling, and then cut to have such dimensions and a shape as enabling a cut sheet to be embedded in the recess formed in each of the insulating base plates 11, 12. Then, the cut sheets of platinum are subjected to annealing for one hour at 1000 °C, and the annealed platinum sheets are used as the working electrode 14 and the counter electrode 15. Crystal grains of platinum after the annealing have a larger size than those of raw platinum before the annealing, i.e., those of raw platinum not annealed after being formed into the predetermined dimensions and shape. Although internal stresses are produced in the platinum during the forming steps inclusive of rolling, the annealing relieves the internal stresses by degrees and promotes dissolution to increase the size of the crystal grains. In this embodiment, an important point is that the annealing temperature is set to 1000 °C. An advantage resulted from so setting the annealing temperature will be described later with reference to Fig. 3.

Before the working electrode 14 and the counter electrode 15 are embedded in the insulating base plates 11, 12, these electrodes are connected to lead wires 21, 22 by soldering, respectively, and the lead wires 21, 22 are extended to pass holes formed through the insulating base plates 11, 12.

The sealing member 13 is made of silicon and has an opening 16 formed at the center. The working electrode 14 and the counter electrode 15 are arranged such that the centers of electrode sensitive areas of their exposed surfaces are positioned to face each other through the opening 16 of the sealing member 13.

The insulating base plate 11, the sealing member 13 and the insulating base plate 12 are fixedly fastened together in pressure contact relation by fitting screws to holes 17a, 17b, 17c, 17d formed in four corners of the insulating base plate 11, holes 18a, 18b, 18c, 18d formed in four corners of the sealing member 13, holes 19a, 19b, 19c, 19d formed in four corners of the insulating base plate 12. The flow through cell 10 is thereby completed.

Pipes 31, 32 made of a fluorine-contained polymer are fixedly connected to the other surface of the insulating base plate 11 opposite to the one surface in which the working electrode is disposed. As described later, one of the pipes 31, 32 is connected to a mechanism for introducing a sample to the flow through cell 10, and the other serves as a flow passage for discharging the sample having been measured through it.

An entire configuration of the electrochemical analyzing apparatus as one embodiment of the present invention will now be described below with reference to Fig. 2.

A sample delivery mechanism 40 introduces both a predetermined volume of sample from a sample cup 42 and a buffer solution from a buffer solution bottle 44 to a sample introducing passage 31. The introduced sample and buffer solution are mixed with each other in the sample introducing passage 31, and a resulting mixture is sent to the flow through cell 10. While the mixture is residing in the flow through cell 10, a voltage is applied to between the working electrode 14 and the counter electrode 15 by voltage applying means 52 for analytical measurement of a target component to be inspected which is contained in the sample.

Signals resulted from the electrochemical reaction occurred between the working electrode and the counter electrode in the flow through cell 10 is transmitted to measuring means 50 via the lead wires 21, 22 for signal processing. Consequently, the measured result of an electrochemical characteristic of the sample introduced to the flow through cell 10 is obtained by the measuring means 50. Here, measurement of the electrochemical characteristic may innclude any of (1) potentiometry in which an electrode potential of a measuring electrode relative to a reference electrode is measured, (2) amperometry in which an amount of electric charges flowing through a measuring electrode applied with a certain voltage relative to a reference electrode is measured, (3) voltammetry in which a relationship between a voltage applied to a working electrode and an amount of current flowing through the working electrode is measured, and (4) impedance measurement in which an alternating current is applied to an electrode and properties of a resulting voltage are measured, and other possible techniques.

The sample having finished the measurement in the flow through cell 10 is sucked by a pump 60 and then discarded into a waste solution bottle 62 via a waste solution tube 32. After the end of measurement of the sample, a wash sucked from a wash bottle 46 by the sample delivery mechanism 40 is introduced to the flow through 10 for cleaning it, and then it is discarded into the waste solution bottle 62.

The voltage applying means 52 is connected to the working electrode 14 and the counter electrode 15 disposed in the flow through cell 10 via the lead wires 21, 22. During the measurement of the sample, the voltage applying means 52 outputs a pulse-like voltage which turns to be positive and negative repeatedly at a predetermined cycle. The analyzing apparatus is designed such that the pulse-like voltage is applied when samples each containing a large amount of any halogen element, such as blood, are continuously introduced to pass the flow through cell for a long period of time, or when a strong alkaline wash, such as potassium hydroxide, is introduced to flow into the flow through cell. This contributes to enhancing a cleaning effect.

An annealing effect of the platinum electrode will now be described below with reference to Fig. 3.

Fig. 3 is a graph for explaining an advantageous effect of the annealed platinum electrode used in one embodiment of the present invention.

In the graph of Fig. 3, the horizontal axis indicates the annealing temperature (°C) and the vertical axis indicates the number of measuring cycles repeated. A solid line A in Fig. 3 represents an advantageous effect of the annealing upon the platinum electrode serving as the counter electrode, and what a solid line B represents will be described later.

The measurement was conducted by setting the flow through cell 10 having the structure shown in Fig. 1 in the electrochemical analyzing apparatus of Fig. 2, using body fluid samples, e.g., blood serum and urine, as a sample to be measured, analyzing a target component contained in each sample, e.g., TSH (Thyroid Stimulating Hormone) in the blood serum, from the immunological point of view, and introducing a wash, e.g., a potassium hydroxide solution, to the flow through cell at the end of each measuring cycle.

As represented by the solid line A in Fig. 3, the number of practicable measuring cycles in the case of not annealing platinum (i.e., in the no-annealing case) was about 1,500. On the other hand, in the case of using the working electrode and the counter electrode in which platinum subjected to annealing at each of 600 °C and 800 °C was used as an electrode material, the number of practicable measuring cycles was increased up to about 3,000 (about two times). Further, when using the platinum electrodes subjected to annealing for one hour at the temperature of 1000 °C, the number of practicable measuring cycles was increased up to about 30,000 (about 20 times). It was thus found that until the measurement was repeated about 30,000 times, no deposition of black particles of a platinum product appeared on the measuring cell and the apparatus was able to continue operation with stable performance for a long period of time.

As mentioned above, crystal grains of platinum after the annealing have a larger size than those of raw platinum before the annealing, i.e., those of raw platinum not annealed after being formed into the predetermined dimensions and shape. In a condition where the platinum material has internal stresses due to the forming steps inclusive of rolling, there occur cracks between the crystal grains. If a pulse-like voltage is applied from the voltage applying means by using an electrode made of the platinum material in such a condition, it is presumed that a large current flows through the cracks between the crystal grains to cause a discharge phenomenon in the cracks, thereby producing a black platinum product. On the contrary, annealing of the platinum material can reduce the cracks between the platinum crystal grains and increase the size of the crystal grains. By using the annealed electrodes, therefore, it is possible to suppress generation of the black particles of the platinum product, avoid deterioration of the cathode, and prevent the platinum product from depositing on the insulating base plate on the cathode side. As a result of observing the condition of crystal grains on the electrode surface with a microscope, it was confirmed that the size of the crystal grains was increased.

In particular, the embodiment of Fig. 2 was proved to be capable of suppressing emergence of the platinum product, avoiding deterioration of the cathode, and achieving stable performance for a long period of time, by using the counter electrode made of platinum having been subjected to annealing at the temperature of 1000 °C.

An electrochemical analyzing apparatus according to a second embodiment of the present invention will now be described below with reference to Figs. 1 to 3 similarly to the above embodiment.

Note that, in this second embodiment, a flow through cell is basically of the same structure as that shown in Fig. 1, and the electrochemical analyzing apparatus also has the same basic configuration as that shown in Fig. 2.

The flow through cell used in the second embodiment differs from that shown in Fig. 1 in structure of the counter electrode. More specifically, the counter electrode of the flow through cell shown in Fig. 1 is made of 99.99 % platinum, whereas the second embodiment uses the counter electrode fabricated by doping Pd (palladium) of 0.22 wt% into the surface of a platinum sheet formed by rolling. Further, in the second embodiment, the working electrode is formed of a platinum electrode not subjected to annealing.

The solid line B in Fig. 3 represents the result of measuring a relationship between the number of practicable measuring cycles and the annealing temperature of the platinum electrode in the second embodiment. Tests were conducted by a process of using blood serum as samples to be measured, analyzing TSH (Thyroid Stimulating Hormone) in the blood serum, as a component to be inspected, from the immunological point of view, and introducing a potassium hydroxide solution, as a wash, to the flow through cell at the end of each measuring cycle.

As represented by the solid line B in Fig. 3 that was resulted from tests made by using the flow through cell in which the counter electrode was formed by doping palladium into the surface of a platinum material, the number of practicable measuring cycles was in the range of about 30,000 to 40,000 for all the tests using a counter electrode not subjected to annealing (i.e., a not-annealed electrode) and counter electrodes subjected to annealing for one hour at temperatures of 600 °C, 800 °C and 1000 °C. It was found that until the measurement was repeated about so many times, no deposition of black particles of a platinum product appeared on the measuring cell and the apparatus was able to continue operation with stable performance for a long period of time.

The reason is as follows. Because the material prepared by doping Pd (palladium) of 0.22 wt% into platinum is used for the counter electrode, a hetero-metal (Pd) doped into the platinum serves as a flux (or solvent) to promote dissolution in the platinum, thereby causing internal metal crystal grains to grow become larger. This makes it possible to reduce cracks between the crystal grains, suppress emergence of the platinum product in the vicinity of the electrode, avoid deterioration of the cathode, and hence prevent the platinum product from depositing on the insulating base plate on the cathode side. As a result of observing the state of crystal grains on the electrode surface with a microscope, it was confirmed that the size of the crystal grains was increased.

With regard to the metal material to be doped, a similar result as mentioned above was obtained also when using an electrode material in which iridium of about 10 wt% was doped as another platinum-group into platinum, instead of doping Pd (palladium) of 0.22 Wt%.

From the result represented by the solid line B in Fig. 3, it was confirmed that a platinum compound generated due to deterioration of the electrode material can also be prevented from depositing on the measuring cell in the case of using the counter electrode formed by doping, into platinum, another platinum-group metal without being subjected to annealing. In particular, since stable measurement can be continued for a longer period (about 20 times) of time than conventional with no need of annealing, the electrode can be manufactured more easily.

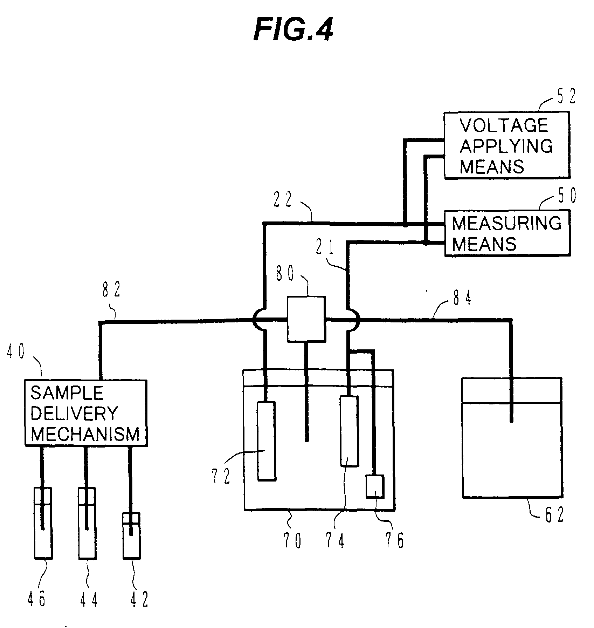

An electrochemical analyzing apparatus according to a third embodiment of the present invention will now be described below with reference to Fig. 4. Fig. 4 is a block diagram showing an entire configuration of the electrochemical analyzing apparatus according to the third embodiment of the present invention. In this third embodiment, the electrochemical analyzing apparatus of the batch processing type is employed.

In a measuring vessel 70 serving as a measuring cell, there are disposed a counter electrode 72, a working electrode 74, and a reference electrode 76 electrically connected to the working electrode 74. The counter electrode 72 is connected to measuring means 50 and voltage applying means 52 via a lead wire 22, whereas the working electrode 74 and the reference electrode 76 are connected to the measuring means 50 and the voltage applying means 52 via the lead wire 21.

In this embodiment, the counter electrode 72 is made of platinum machined into the form of a plate and then subjected to annealing for one hour at 1000 °C. The working electrode 74 and the reference electrode 76 are each made of platinum machined into the form of a plate, but not subjected to annealing.

A sample delivery mechanism 40 introduces both a predetermined volume of sample from a sample cup 42 and a buffer solution from a buffer solution bottle 44 to a sample introducing passage 82. The introduced sample and buffer solution are mixed with each other in the sample introducing passage 82, and a resulting mixture is injected to the measuring vessel 70 by a sample injection mechanism 80 for electrochemical measurement of the sample.

The measuring means 50 carries out measurement of electrochemical characteristic of the sample. The measurement of electrochemical characteristic may include any of (1) potentiometry in which an electrode potential of a measuring electrode relative to a reference electrode is measured, (2) amperometry in which an amount of electric charges flowing through a measuring electrode applied with a certain voltage relative to a reference electrode is measured, (3) voltammetry in which a relationship between a voltage applied to a working electrode and an amount of current flowing through the working electrode is measured, and (4) impedance measurement in which an alternating current is applied to an electrode and properties of a resulting voltage are measured, and other possible technique.

The sample having finished the measurement is sucked by the sample injection mechanism 80 and then discarded into a waste solution bottle 62 via a waste solution tube 84. After the end of measurement of the sample, a wash is sucked from a wash bottle 46 by the sample delivery mechanism 40 and supplied to the measuring vessel 70 by the sample injection mechanism 80. The wash having cleaned the measuring vessel 70 is discarded into the waste solution bottle 62.

Here, the voltage applying means 52 operates in the same manner as with that in the embodiment of Fig. 2.

Similarly to the embodiment explained above, tests were conducted by a process of using blood serum as samples to be measured, analyzing TSH (Thyroid Stimulating Hormone) in the blood serum, as a component to be inspected, from the immunological point of view, and introducing a potassium hydroxide solution, as a wash, to the measuring vessel at the end of each measuring cycle. The tests gave a similar result as indicated by the solid line A in Fig. 3.

More specifically, in comparison with the case of using the counter electrode made of platinum not subjected to annealing (i.e., the no-annealing case), the number of practicable measuring cycles was increased about two times in the case of using the counter electrode in which platinum subjected to annealing at each of 600 °C and 800 °C was used as an electrode material. Further, when using the counter electrode in which platinum subjected to annealing at the temperature of 1000 °C was used as an electrode material, the number of practicable measuring cycles was increased about 10 times as many as the case of annealing platinum at 800 °C. For the counter electrode subjected to the annealing at 1000 °C, it was found that until the measurement was repeated about 30,000 times, no deposition of a platinum product appeared and the apparatus was able to continue operation with stable performance for a long period of time.

Further, tests were made by using, as the counter electrode 72, an electrode which was fabricated by forming an electrode material of platinum doped with Pd of 0.22 wt% and rolling it into the form of a thin pate without being subjected to annealing (i.e., a not-annealed electrode) and counter electrodes which were fabricated in the same manner and then subjected to annealing for one hour at temperatures of 600 °C, 800 °C and 1000 °C. The tests gave a similar result as represented by the solid line B in Fig. 3.

## Claims

1. An electrochemical analyzing apparatus for carrying out electrochemical measurement of samples by applying a voltage to between a working electrode (14) and a counter electrode (15), wherein:
said counter electrode (15) is formed of a platinum-group metal subjected to treatment for increasing the size of metal crystal grains.

2. An electrochemical analyzing apparatus according to Claim 1, wherein said treatment for increasing the size of metal crystal grains is annealing.

3. An electrochemical analyzing apparatus according to Claim 2, wherein said annealing is performed for at least one hour at a temperature of 1000 °C.

4. An electrochemical analyzing apparatus according to Claim 2, wherein said annealing is applied to the platinum-group metal machined to have a shape of said counter electrode.

5. An electrochemical analyzing apparatus according to Claim 1, wherein said working electrode (14) and said counter electrode (15) are disposed in a flow through cell (10).

6. An electrochemical analyzing apparatus according to Claim 1, wherein said counter electrode (15) has a surface finished by mirror-grade polishing.

7. An electrochemical analyzing apparatus according to Claim 1, wherein a pulse-like voltage is repeatedly applied plural times to between said working electrode (14) and said counter electrode (15).

8. An electrochemical analyzing apparatus according to Claim 1, wherein said working electrode (14) is formed of a platinum-group metal subjected to treatment for increasing the size of metal crystal grains.

9. An electrochemical analyzing apparatus according to Claim 1, wherein said treatment for increasing the size of metal crystal grains is to dope a different kind of platinum-group metal in the surface of one particular platinum-group metal.

10. An electrochemical analyzing apparatus according to Claim 9, wherein said particular platinum-group metal is platinum and said different kind of platinum-group metal is palladium or iridium.
